# EUROPÄISCHE PATENTSCHRIFT

(11) **EP 3 694 678 B1**
(45) Veröffentlichungstag und Bekanntmachung des Hinweises auf die Patenterteilung: **03.04.2024**
(21) Anmeldenummer: 19716854.5
(22) Anmeldetag: 03.04.2019
(51) Int. Cl.: B23K 20/04, B23K 20/233

(54) **VERFAHREN ZUM HERSTELLEN EINER METALLPLATTE MIT EINGEBETTETEM TEMPERATURSENSOR, SOWIE DANACH HERGESTELLTE METALLPLATTE**
METHOD FOR PRODUCING A METAL PLATE HAVING AN EMBEDDED TEMPERATURE SENSOR AND METAL PLATE PRODUCED THEREBY
PROCÉDÉ DE FABRICATION D'UNE PLAQUE MÉTALLIQUE DOTÉE D'UN CAPTEUR DE TEMPÉRATURE INTÉGRÉ ET PLAQUE MÉTALLIQUE AINSI FABRIQUÉE

(30) Priorität: 06.04.2018 DE 102018108240
(43) Veröffentlichungstag der Anmeldung: 19.08.2020
(73) Patentinhaber: Alinox AG, 8360 Eschlikon (CH)
(72) Erfinder: SPRING, Markus, 8360 Eschlikon (CH)
(74) Vertreter: Schumacher & Willsau
(86) Internationale Anmeldenummer: PCT/EP2019/058391
(87) Internationale Veröffentlichungsnummer: WO 2019/193044

(56) Entgegenhaltungen:
- EP-A1- 2 525 938
- WO-A1-2017/134017
- JP-A- 2004 071 363

## Beschreibung

Die Erfindung betrifft ein Verfahren zum Herstellen und gegebenenfalls Bearbeiten einer Metallplatte, die mit mindestens einem eingebetteten Temperatursensor versehen oder nachrüstbar ist, gemäß dem Oberbegriff des Anspruchs 1.

Außerdem betrifft die Erfindung ein Koch- oder Bratgefäß aus einer Metallplatte, hergestellt gemäß dem erfindungsgemäßen Verfahren, wobei die Metallplatte mit mindestens einem eingebetteten Temperatursensor versehen oder nachrüstbar ist, gemäß dem Oberbegriff des Anspruchs 5.

Ein gattungsgemäßes Verfahren ist aus dem Dokument EP 2 525 938 B1 bekannt. Bei der durch dieses bekannte Verfahren hergestellten Metallplatte, die neben einem eingebetteten Heizelement auch einen eingebetteten Temperatursensor aufweist, hat der Temperatursensor einen ausgeprägten Messkopf, von dem zwei Drähte sich nach außerhalb der Metallplatte erstrecken. Der Temperatursensor mit ausgeprägtem Messkopf dürfte aus einem Keramikkörper bestehen, in den die elektrische Schaltung des Temperatursensors eingebettet ist. Wegen des Keramikkörpers müssen der oder die Plattenkörper aus Aluminium oder einer Aluminiumlegierung eine Aussparung für den Keramikkörper aufweisen, damit dieser bei dem Walzprozess nicht zerstört wird. Das Erfordernis des Vorsehens einer solchen Aussparung für jeden Keramikkörper macht den Walzprozess kompliziert und teuer. Darüber hinaus gibt es solche Temperatursensoren in Form von Pₜ₁₀₀ und Pₜ₁₀₀₀, die aber meistens aus Kunststoff aufgebaut sind. Das heißt, ein gewickelter Platindraht ist nicht in Keramik eingebettet, sondern in Kunststoff. Auch solche Temperatursensoren sind für eine durch Walzen herzustellende Metallplatte ungeeignet, weil im vorliegenden Fall beim Walzen Temperaturen von um die 380°C auftreten.

Das Dokument DE 10 2007 054 071 A1 befasst sich mit einem Verbundmetallgegenstand aus mehreren Schichten, von denen eine mit streifenförmigen Ausnehmungen versehen ist. In diesen Verbundmetallgegenstand kann zwar ebenfalls ein rohrförmiger Körper eingebettet sein, das Einbetten in das Metall erfolgt jedoch erst nachdem der rohrförmige Körper in eine Ausnehmung eingelegt worden ist, wobei deren Querschnittsform vorzugsweise der Querschnittsform des rohrförmigen Körpers angepasst ist. Durch das Gegeneinanderpressen der metallischen Schichten des Verbundmetallgegenstands wird dann der rohrförmige Körper in das Metall eingebettet. Vor oder nach dem Gegeneinanderpressen kann ein weiterer Körper in den rohrförmigen Körper eingeführt werden. Bei dem weiteren Körper kann es sich um einen Temperatursensor, zum Beispiel einen drahtförmigen Sensor, handeln.

Weiterhin betreffen auch die Dokumente WO 2017/134017 A1 und JP 2004 071363 das technische Gebiet der Erfindung.

Neben den erwähnten Problemen würde sich ein weiteres und hier besonders zu beachtendes Problem stellen, wenn die Metallplatte mechanisch bearbeitet werden würde, indem sie tiefgezogen wird, um beispielsweise Töpfe oder Pfannen herzustellen. Solche Koch- oder Bratgefäße haben nämlich am Übergang vom Boden zur aufrechten Wand einen Radius, also eine Rundung, um die die Anschlussdrähte des Temperatursensors, wenn dieser im Boden eingebettet wäre, gezogen werden müssten. Der Draht müsste biegsam sein und dürfte bei diesem Vorgang auf keinen Fall reißen. Er müsste auch dehnbar sein, denn das Material, das tiefgezogen wird, wird zum Beispiel im Bereich der Rundung, wo die Wand in den Boden übergeht, am stärksten gezogen und gedehnt. Wenn der Temperatursensor in die Metallplatte fest eingebettet ist, müsste der Draht die gleiche Dehnung mitmachen, die auch die Metallplatte beim Tiefziehen erfährt. Ein weiteres Problem ergibt sich dadurch, dass die Drähte des Temperatursensors gegenseitig und gegen die Metallplatte isoliert sein müssen. Normale Drahtisolationen bestehen aber heutzutage aus Kunststoff, der schon den Walzprozess nicht aushalten würde und auf gar keinen Fall einen Tiefziehprozess.

Zur Umgehung dieser Probleme ist es bei heutigen tiefgezogenen Küchengefäßen, die zum Braten oder Kochen eingesetzt werden und häufig einen dicken Boden aufweisen, der induktionsfähig ist, üblich, bei dem fertig tiefgezogenen Gefäß parallel zu der Ebene des Bodens von der Außenseite des Küchengefäßes her eine Bohrung in den Boden einzubringen, in welche ein Temperatursensor, der mit Anschlussdrähten versehen ist, bis in die Mitte des Bodens eingeschoben werden könnte. Der Temperatursensor wird vorgesehen, um mit seiner Hilfe den Kochprozess steuern zu können. Dafür muss das Gefäß drahtlos ein Signal zu einer Steuereinrichtung übertragen können, in welcher das Signal verarbeitet und die Induktions- oder sonstige Heizung des Gefäßes einem bestimmten Speisenzubereitungsprogramm angepasst wird. Ein besonderes Problem, das sich bei der Einbringung des Temperatursensors in das Gefäß stellt, besteht darin, dass nur eine geradlinige Bohrung im Boden hergestellt werden kann. Vom Eingang der Bohrung aus müssen die Anschlussdrähte des Temperatursensors deshalb an der Wand des Gefäßes außen nach oben geführt werden, zum Beispiel zu einem Transponder, der das Temperatursignal des Temperatursensors drahtlos weiterleitet. Um die Anschlussdrähte des Temperatursensors und den Transponder vor Beschädigung zu schützen und die optische Erscheinung des Gefäßes nicht zu beeinträchtigen, werden üblicherweise die Anschlussdrähte des Temperatursensors und der Transponder unter einem passend dimensionierten und an der Wand des Gefäßes außen befestigten Griff oder Stiel verborgen. Auf der gegenüberliegenden Seite des Gefäßes wird, wenn es ein Topf ist, außen ein entsprechender Griff angebracht, der aber die gleichen, relativ großen Abmessungen des erstgenannten Griffes aufweisen muss. Das alles ist der Optik es Gefäßes nicht zuträglich.

Aufgabe der Erfindung ist es, ein Verfahren zum Herstellen einer Metallplatte mit mindestens einem eingebetteten Temperatursensor zu schaffen, das es ermöglicht, die vorgenannten Nachteile zu beseitigen.

Diese Aufgabe wird durch die in den unabhängigen Ansprüchen angegebenen Merkmale gelöst. Vorteilhafte Ausgestaltungen und Weiterbildungen der Erfindung ergeben sich aus den abhängigen Ansprüchen.

Die Erfindung bietet unter anderem den Vorteil, dass die Freilegestelle an passender Stelle vorgesehen und abgedeckt werden kann, ohne dass die optische Erscheinung des Küchengefäßes beeinträchtigt wird.

Eine der Erfindung zugrundeliegende Grundidee ist auch darin zu sehen, dass bei dem Walzprozess bei der Herstellung der aus Plattenkörpern aufgebauten Metallplatte in die Metallplatte ein Schutzrohr eingewalzt wird, das der Mantel eines Mantelthermoelements ist oder das ein Leerrohr ist, in das ein Temperatursensor, vorzugweise ein Mantelthermoelement, nach dem Herstellen und gegebenenfalls mechanischen Bearbeiten der Metallplatte durch Tiefziehen, einschiebbar ist. Das Schutzrohr ist vorzugsweise ein dünnes Röhrchen, zum Beispiel mit einem Durchmesser von etwa 1,5 mm, in dem die Anschlussdrähte eines Temperaturmesskopfes, vorzugsweises die Thermodrähte eines Thermopaares, beweglich untergebracht sind oder durch Keramikpulver oder dergleichen gegenüber der Wand des Schutzrohres abgestützt und dieser gegenüber isoliert sind. Dieses Schutzrohr, das zugleich der Mantel eines Mantelthermoelements sein kann, das von Anfang an mit in die Metallplatte eingewalzt oder erst nach deren Herstellung in diese eingeschoben wird, wird die Verformung beim Herstellen der Metallplatte und später beim Tiefziehen mitmachen, da die Anschlussdrähte des Thermopaares innerhalb des Röhrchens relativ beweglich sind und die Verformung ebenfalls mitmachen. Darüber hinaus haben diese Anschlussdrähte keine Isolation aus Kunststoff oder dergleichen, die das verhindern würde. Erfindungsgemäß werden keine vorher hergestellten Ausnehmungen in den Plattenkörpern vorgesehen, die dann das Schutzrohr oder das Thermoelement oder dergleichen einschließlich dessen Drähten vor dem Walzprozess aufnehmen. Es wird zwar häufig so sein, dass das Schutzrohr nach dem Walzprozess statt kreisrund etwas oval ist, trotzdem behält es in jedem Fall eine ausreichende lichte Weite, damit, wenn das Schutzrohr der Mantel eines Mantelthermoelements ist, dieses unbeschädigt bleibt, oder dass in dem anderen Fall, wo das Schutzrohr ein Leerrohr ist, ein Mantelthermoelement bequem nachträglich in das Schutzrohr eingeschoben werden kann. Erfindungswesentlich ist, dass zum Einbetten des rohrförmigen Körpers in die Metallschichten des Verbundmetallgegenstandes keine Ausnehmung oder gar eine an den Querschnitt des rohrförmigen Körpers angepasste Ausnehmung vorab hergestellt werden muss, denn der rohrförmige Körper wird bei dem Gegeneinanderpressen der Schichten direkt in das Metall eingebettet.

Ausgestaltungen der Erfindung bilden die Gegenstände der abhängigen Ansprüche.

In einer Ausgestaltung des Verfahrens nach der Erfindung werden vor dem Walzen die beiden Plattenkörper als Kernschichten zwischen zwei Deckschichten, die durch einen dritten und einen vierten Plattenkörper gebildet werden und aus einem anderen Metall wie rostfreiem Stahl bestehen, angeordnet und bei dem Walzen gesamtflächig stoffschlüssig mit sich und den übrigen beiden Plattenkörpern diffusionsverbunden. Die fertige Metallplatte nach der Erfindung weist überhaupt keinen Luftspalt auf, der die Wärmeleitfähigkeit beeinträchtigen könnte. Die Metallplatte eignet sich so hervorragend zur Weiterverarbeitung zu einem Küchengefäß der oben beschriebenen Art, das beim sogenannten intelligenten Kochen eingesetzt werden kann, für das das Küchengefäß ein Temperatursignal zu liefern in der Lage sein muss, um eine entsprechende Regelung der für einen Garprozess eingesetzten Heizeinrichtung (vorzugsweise Induktionsheizung) zu ermöglichen.

In einer weiteren Ausgestaltung des Verfahrens nach der Erfindung ist die Metallplatte nach dem Walzen in einem Zustand oder wird durch eine Wärmenachbehandlung in einen Zustand versetzt, in dem sie durch mechanische Umformung weiterverarbeitbar ist, vorzugsweise zu einem beim intelligenten Kochen eingesetzten Küchengefäß.

In einer weiteren Ausgestaltung des Verfahrens nach der Erfindung lässt sich ein Mantelthermoelement einsetzen, bei dem zwei Thermodrähte in einen von einem Mantel umschlossenen Kern aus Keramik- oder mineralischem Material oder hitzebeständigem Kunststoff eingebettet sind.

Die durch das Verfahren nach der Erfindung hergestellte Metallplatte ist mit mindestens einem eingebetteten Temperatursensor versehen oder nachrüstbar und weist auf: mindestens ein Schutzrohr des Temperatursensors, das zwischen dem ersten und dem zweiten Plattenkörper angeordnet ist, die jeweils aus Aluminium oder einer Aluminiumlegierung bestehen und vor dem Walzen nicht mit Ausnehmungen zur Aufnahme des oder jedes Schutzrohres versehen worden sind, wobei das oder jedes Schutzrohr unmittelbar kontaktierend in den ersten und den zweiten Plattenkörper eingebettet ist, wobei der erste und der zweite Plattenkörper gesamtflächig und stoffschlüssig miteinander und mit dem oder jedem Schutzrohr verbunden sind und wobei alle Plattenkörper im Bereich ihrer einander berührenden Seiten eine gegenseitige Diffusionsverbindung haben, so dass alle Plattenkörper gesamtflächig stoffschlüssig zu der herzustellenden Metallplatte miteinander und mit dem oder jedem Schutzrohr verbunden sind.

In einer Ausgestaltung der Metallplatte nach der Erfindung sind der erste und der zweite Plattenkörper als Kernschichten zwischen zwei Deckschichten, die durch einen dritten und einen vierten Plattenkörper gebildet sind und aus einem anderen Metall wie rostfreiem Stahl bestehen, angeordnet und gesamtflächig stoffschlüssig mit sich sowie dem dritten und dem vierten Plattenkörper diffusionsverbunden. Diese Ausgestaltung der Metallplatte eignet sich insbesondere für die Herstellung von Küchengefäßen der oben genannten Art, die aus der Metallplatte durch Tiefziehen hergestellt werden können, ohne dass das Schutzrohr unbrauchbar gemacht oder ein in die Metallplatte eingesetztes Mantelthermoelement durch das Walzen beschädigt wird, sich aber trotzdem bis in die Wand des Küchengefäßes und nicht nur in dessen Boden erstreckt.

In einer weiteren Ausgestaltung der Metallplatte nach der Erfindung ist sie nach dem Walzen in einem Zustand oder durch eine Wärmenachbehandlung in einen Zustand versetztbar, in dem sie durch mechanische Umformung weiterbearbeitbar ist. Eine oder keine Wärmenachbehandlung ist für manche Metalle, die bei der Erfindung zum Einsatz kommen, besonders zweckmäßig.

In einer weiteren Ausgestaltung der Metallplatte nach der Erfindung weist diese als Temperatursensor ein Thermoelement auf, bei dem zwei Thermodrähte in eine von einem Mantel umschlossene Isolation aus mineralischem Material oder hitzebeständigem Kunststoff eingebettet sind.

In einer weiteren Ausgestaltung der Metallplatte nach der Erfindung ist der Temperatursensor ein Mantelthermoelement, das vor dem Walzprozess in das Schutzrohr eingeschoben und in dem Walzprozess mit dem Schutzrohr in die Metallplatte eingewalzt worden ist oder das statt des Schutzrohres in die Metallplatte eingewalzt worden ist. Ein besonderer Vorteil des erfindungsgemäßen Verfahrens ist somit, dass ein Mantelthermoelement bereits bei der Herstellung der Metallplatte mit eingewalzt werden kann oder aber nach dem Abschluss des Walzprozesses und nach dem Tiefziehen noch in das Schutzrohr eingeschoben werden kann.

Ausführungsbeispiele der Erfindung werden im Folgenden unter Bezugnahme auf die Zeichnungen näher beschrieben. Es zeigt
- Figur 1: eine Querschnittansicht einer Anordnung von Plattenkörpern mit einem dazwischen angeordneten Schutzrohr für eine Durchführung des Verfahrens nach der Erfindung, bei der ein Schutzrohr in die Plattenkörper eingewalzt wird, ohne dass dafür vorher hergestellte Ausnehmungen in den Plattenkörpern erforderlich sind,
- Figur 2: eine Querschnittansicht eines Mantelthermoelements,
- Figur 3: in einer Längsschnittansicht einen Aufbau, bei dem ein Mantelthermoelement in einem Schutzrohr angeordnet ist,
- Figur 4: in einer Längsschnittansicht den Aufbau nach Figur 3, die aber das Mantelthermoelement ohne das Schutzrohr zeigt, und die
- Figuren 5 und 6: Schnittansichten eines jeweils als ein Topf dargestellten Kochgefäßes gemäß zwei Ausgestaltungen der Erfindung.

Die Erfindung betrifft das Herstellen und gegebenenfalls Bearbeiten einer Metallplatte 10, die mit mindestens einem eingebetteten Temperatursensor versehen oder nachrüstbar ist. Bei der Herstellung der Metallplatte 10 sind verschiedene, eingangs nicht erwähnte Schritte auszuführen, die im Stand der Technik bei der Herstellung einer Diffusionsverbindung zwischen Metallen üblich sind wie Reinigen der Metalloberflächen, Wärmevorbehandeln der Plattenkörper und Walzen derselben zur Erzielung einer gegenseitigen Diffusionsverbindung und gegebenenfalls eine Wärmenachbehandlung. Diese zusätzlichen Schritte sind hier zwar nicht beschrieben, festgehalten sei jedoch, dass, wenn durch das Verfahren nach der Erfindung Plattenkörper aus Aluminium oder aus einer Aluminiumlegierung miteinander verbunden werden, was vorzugsweise durch Walzen erfolgt, werden die Oberflächen von jeder Aluminiumschicht vor dem Gegeneinanderpressen auf eine Temperatur erhitzt werden, die über der Rekristallisationstemperatur des Aluminiums liegt, aber unterhalb des Schmelzpunktes des Aluminiums. Vorzugsweise wird die so hergestellte Metallplatte 10 abschließend geglüht, wonach sie dann weiterverarbeitet und dabei durch mechanische Bearbeitung umgeformt werden kann, zum Beispiel durch Tiefziehen.

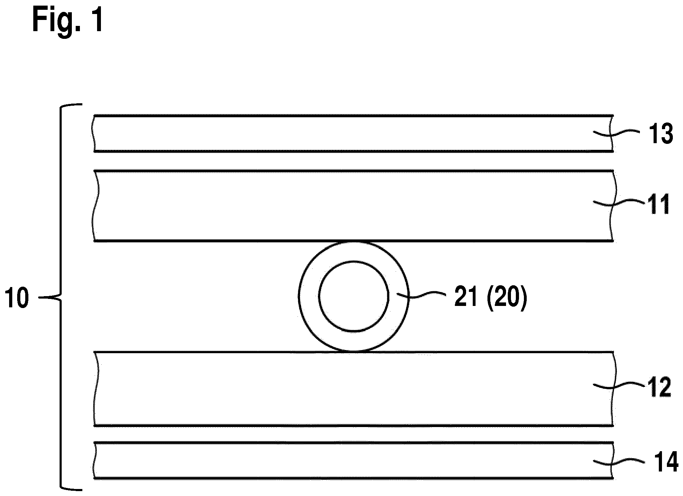

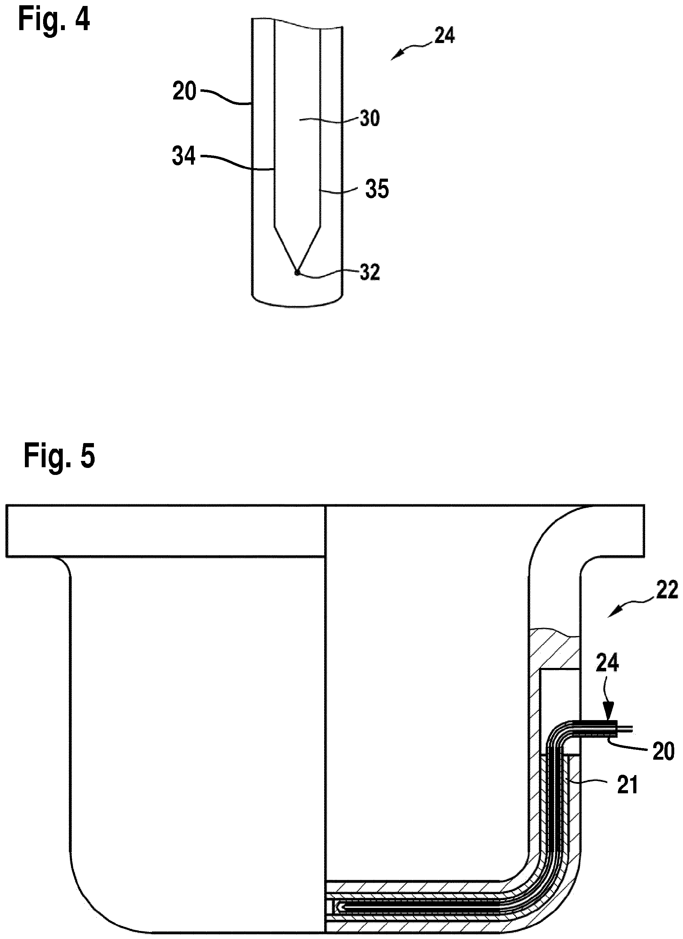

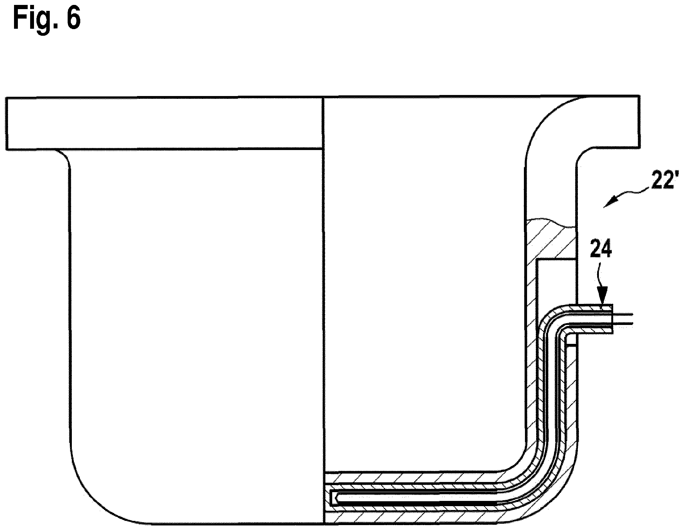

Figur 1 zeigt in einer Querschnittansicht vier übereinander angeordnete Plattenkörper, und zwar einen ersten Plattenkörper 11 aus Aluminium (der Einfachheit halber wird in der folgenden Beschreibung die Angabe Aluminiumlegierung weggelassen, wobei aber klar ist, dass statt Aluminium auch eine Aluminiumlegierung eingesetzt werden kann). Ein zweiter Plattenkörper 12 besteht ebenfalls aus Aluminium. Ein dritter Plattenkörper 13 und ein vierter Plattenkörper 14 bestehen jeweils aus rostfreiem Stahl oder aus Titan. Das Walzen geschieht in einem Walzenspalt zwischen zwei Walzen, die ebenso wie ein übriges Walzwerk hier nicht dargestellt sind. Der Aufbau entspricht aber im Wesentlichen dem Aufbau, der aus dem Dokument EP 2 525 938 B1 bekannt ist. Da aus der durch die Erfindung herzustellenden Metallplatte 10 ein aus Mehrschichtmaterial durch Tiefziehen geformtes Kochgefäß 22, 22' (Figur 5 bzw. Figur 6) hergestellt werden soll, bestehen die beiden äußeren Schichten der herzustellenden Metallplatte 10, nämlich die Plattenkörper 13, 14 jeweils aus rostfreiem Stahl. Die Plattenkörper 13, 14 ergeben jeweils eine der beiden Deckschichten der herzustellenden Metallplatte 10.

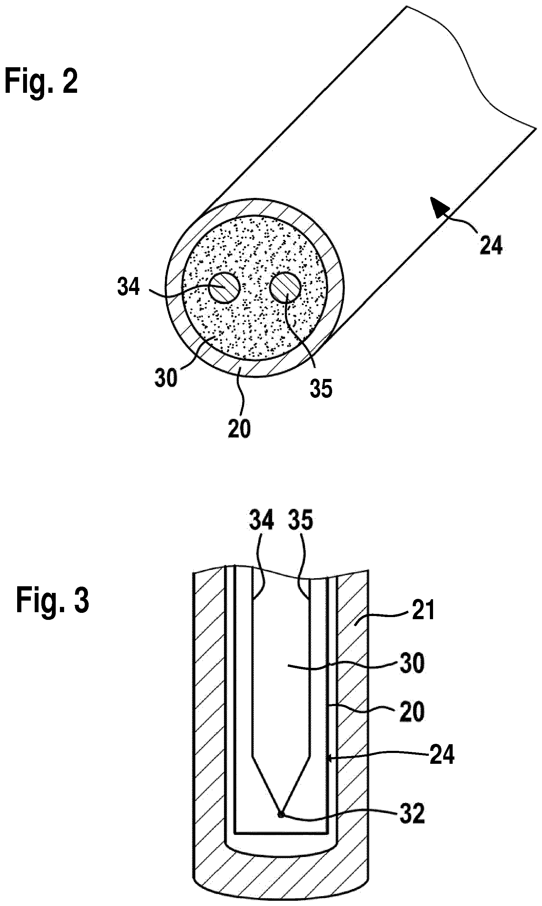

Gemäß der Querschnittansicht in Figur 1 wird ohne die Zuhilfenahme einer Ausnehmung ein Schutzrohr 21 (20), welches entweder ein Mantel 20 eines in Figur 2 gezeigten Mantelthermoelements 24 oder aber ein Schutzrohr 21 zur Aufnahme eines Mantelthermoelements 24 sein kann, zwischen die Plattenkörper 11, 12 eingelegt. In letzterem Fall wird das Mantelthermoelement 24 erst nach Fertigstellung der Metallplatte 10 oder des aus der fertigen Metallplatte hergestellten Kochgefäßes (Figur 5) in das Schutzrohr 21 eingeschoben.

Bei der in Figur 1 gezeigten Anordnung von Plattenkörpern 11, 12, 13, 14 wird demgemäß bei dem Walzprozess der Mantel 20 oder das Schutzrohr 21 in die Plattenkörper 11, 12 unter Materialverdrängung eingewalzt, wobei das Schutzrohr 21 oder der Mantel 20 aber aus so hartem Metall besteht, dass es seine im Querschnitt gezeigte kreisrunde Form im Wesentlichen beibehält. Bei dem Walzen werden die zuvor durch Wärmevorbehandlung der Plattenkörper 11 und 12 auf eine Temperatur, die über der Rekristallisationstemperatur des Aluminiums oder der Aluminiumlegierung, aber unterhalb des Schmelzpunktes des Aluminiums ist, wärmevorbehandelt und anschließend durch Walzen gegeneinander gepresst, um das Einbetten des Schutzrohres 21 (20) in die Plattenkörper 11, 12 zu bewirken, bei dem alle Plattenkörper im Bereich ihrer einander berührenden Seiten eine gegenseitige Diffusionsverbindung eingehen und dadurch alle Plattenkörper gesamtflächig stoffschlüssig zu der herzustellenden Metallplatte miteinander und mit dem Schutzrohr 21 (20) verbunden werden.

Bei der in Figur 1 gezeigten Anordnung von Plattenkörpern 11-14 werden vor dem Walzen die beiden Plattenkörper 11, 12 als Kernschichten zwischen zwei Deckschichten angeordnet, die durch den dritten und den vierten Plattenkörper 13 beziehungsweise 14 gebildet werden und aus einem anderen Metall, vorzugsweise rostfreiem Stahl oder Titan, bestehen. Bei dem Walzen werden alle Plattenkörper gesamtflächig stoffschlüssig miteinander diffusionsverbunden.

Versuche haben gezeigt, dass, wenn die beiden Plattenkörper 11, 12 aus einer Aluminiumlegierung bestehen, es zusätzliche Vorteile mit sich bringen kann, jeden der Plattenkörper 11, 12 beidseitig mit einer dünnen Auflage aus einer Schicht reinen Aluminiums zu versehen. Beispielshalber bei einer Dicke der Plattenkörper 11, 12 von jeweils 1 mm beträgt die Dicke der Auflagen aus reinem Aluminium jeweils ca. 5 bis 10 %. Dieses Ausführungsbeispiel der Erfindung ist in den Zeichnungen nicht dargestellt. Vom Patentanspruch 1 wird es dadurch umfasst, dass im Schritt a) des Verfahrens nach der Erfindung der erste und der zweite Plattenkörper 11, 12 jeweils aus Aluminium und/oder einer Aluminiumlegierung bestehen können.

Vorzugsweise ist die Metallplatte nach dem Walzen in einem Zustand oder durch eine Wärmenachbehandlung in einen Zustand versetzbar, in dem sie durch mechanische Umformung, zum Beispiel Tiefziehen, weiterverarbeitbar ist.

Als Temperatursensor wird ein Mantelthermoelement 24 eingesetzt, wie es schematisch in Figur 2 in einer Querschnittansicht gezeigt ist. In dem in Figur 2 gezeigten Ausführungsbeispiel sind zwei Thermodrähte 34, 35 von einem Mantel 20 umschlossen. Der Mantel 20 kann ebenso wie das Schutzrohr 21 aus rostfreiem Stahl bestehen und biegsam sein. Die Dickendarstellung des Mantels 20 und des Schutzrohres 21 in den beigefügten Zeichnungen ist rein schematisch und sagt nichts über die tatsächlich eingesetzten Dickenverhältnisse aus. In dem in Figur 2 gezeigten Ausführungsbeispiel bilden die beiden im Querschnitt dargestellten Thermodrähte 34, 35 ein in Figur 3 gezeigtes Thermopaar 32. Die Isolation 30 derselben kann aus Magnesiumoxid oder aus einem hitzebeständigen Kunststoff bestehen. Der Mantel 20 des Thermoelements 24 kann ebenfalls aus rostfreiem Stahl bestehen. Die in Figur 3 gezeigte gegenseitige Anordnung von Thermodrähten 34, 35, Mantel 20, Schutzrohr 21 und Isolation 30 wird jeweils so gewählt, dass ein Mantelthermoelement 24 nachträglich in das Schutzrohr 21 eingeschoben werden kann, wie es in Figur 5 gezeigt ist, oder dass ein Mantelthermoelement 24, dessen Mantel 20 als Schutzrohr fungiert, in die Plattenkörper 11, 12 eingewalzt werden kann, wie es in Figur 6 gezeigt ist.

In der Darstellung in Figur 3 befindet sich in dem Mantel 20 des Mantelthermoelements 24 das Thermopaar 32 mit zwei Thermodrähten 34, 35. In der Ausgestaltung nach Figur 5 wird das Mantelthermoelement 24 in das Schutzrohr 21 eingeschoben, das vorzugsweise aus rostfreiem Stahl besteht. Das Thermopaar 32 mit der keramischen Isolation 30 befindet sich direkt im Mantel 20. Das Schutzrohr 21 besteht vorzugsweise aus hitzebeständigem rostfreiem Stahl.

Figur 4 zeigt in einer Längsschnittansicht das Mantelthermoelement 24 ohne das Schutzrohr 21. Der Mantel 20 des Mantelthermoelements 24 ist dünnwandig und besteht zum Beispiel aus hitzebeständigem rostfreiem Stahl (Inconel 600). Die Thermodrähte 34, 35 (Figur 3) bestehen aus Thermomaterial und sind in gepresstes feuerfestes Magnesiumoxid eingebettet. Das Mantelthermoelement 24 ist insgesamt biegsam. In einem von der Anmelderin realisierten Ausführungsbeispiel hat das Mantelthermoelement 24 vor dem Walzen einen Außendurchmesser von vorzugsweise 1,5 Millimeter.

Das in Figur 4 gezeigte Mantelthermoelement 24 basiert auf einem mineralisolierten Mantel. Die Isolation 30 ist feuerfestes Magnesiumoxidpulver. Die Biegsamkeit des Mantelthermoelements 24 macht Biegeradien realisierbar, die den Einsatz des Mantelthermoelements an sonst schwer zugänglichen Stellen eines Kochgefäßes ermöglichen, wie zum Beispiel im Boden eines Kochgefäßes 22, wie es in Figur 5 gezeigt ist, oder im Boden eines Kochgefäßes 22', wie es in Figur 6 gezeigt ist.

### Bezugszeichenliste

- 10: Metallplatte
- 11: erster Plattenkörper
- 12: zweiter Plattenkörper
- 13: dritter Plattenkörper
- 14: vierter Plattenkörper
- 20: Mantel
- 21: Schutzrohr
- 22: Kochgefäß
- 22': Kochgefäß
- 24: Mantelthermoelement
- 30: Isolation
- 32: Thermopaar
- 34, 35: Thermodrähte

## Patentansprüche

1. Verfahren zum Herstellen und gegebenenfalls Bearbeiten einer aus Plattenkörpern aufgebauten Metallplatte (10), die mit mindestens einem eingebetteten Temperatursensor versehen oder nachrüstbar ist, mit den folgenden Schritten:
a) Anordnen von mindestens einem metallischen Schutzrohr (21), das der Mantel (20) eines Mantelthermoelements (24) ist oder das ein Leerrohr ist, in das ein Temperatursensor, vorzugsweise ein Mantelthermoelement (24), nach dem Herstellen und gegebenenfalls Bearbeiten der Metallplatte (10) einschiebbar ist, zwischen einem ersten und einem zweiten Plattenkörper (11, 12), die nicht mit Ausnehmungen zur Aufnahme des oder jedes Schutzrohres (21) versehen sind und jeweils aus Aluminium und/oder einer Aluminiumlegierung bestehen,
b) Einbetten des oder jedes Schutzrohres (21) unmittelbar kontaktierend in den ersten und den zweiten Plattenkörper (11, 12) durch Zusammenpressen und Materialverdrängung des ersten und des zweiten Plattenkörpers (11, 12) durch Walzen und dabei
c) gesamtflächiges Miteinanderverbinden der Plattenkörper (11, 12), wobei die Plattenkörper (11, 12) bei einer Temperatur, die über der Rekristallisationstemperatur des Aluminiums oder der Aluminiumlegierung, aber unterhalb des Schmelzpunktes des Aluminiums ist, wärmevorbehandelt und anschließend durch das Walzen gegeneinander gepresst werden, um das Einbetten des oder jedes Schutzrohres (21) in die Plattenkörper (11, 12) zu bewirken, wobei die Plattenkörper (11, 12) im Bereich ihrer einander berührenden Seiten eine gegenseitige Diffusionsverbindung eingehen und dadurch die Plattenkörper (11, 12) gesamtflächig stoffschlüssig zu der herzustellenden Metallplatte (10) miteinander und mit dem oder jedem Schutzrohr (21) verbunden werden;
**dadurch gekennzeichnet, dass** die Metallplatte (10) nach dem Walzen durch Tiefziehen zu einem Koch- oder Bratgefäß (22, 22'), das einen Boden und eine sich von diesem aus mit einem Radius nach oben erstreckende Wand aufweist, umgeformt wird und dass anschließend ein Ende des Mantels (20) oder des Leerrohres außen in der Wand für einen elektrischen Anschluss des Temperatursensors freigelegt wird.

2. Verfahren nach Anspruch 1, **dadurch gekennzeichnet, dass** vor dem Walzen die beiden Plattenkörper (11, 12) als Kernschichten zwischen zwei Deckschichten, die durch einen dritten und einen vierten Plattenkörper (13, 14) gebildet werden und aus einem anderen Metall wie rostfreiem Stahl bestehen, angeordnet werden und bei dem Walzen gesamtflächig stoffschlüssig mit sich und den übrigen beiden Plattenkörpern (11, 12) diffusionsverbunden werden.

3. Verfahren nach einem der vorhergehenden Ansprüche, **dadurch gekennzeichnet, dass** die Metallplatte (10) nach dem Walzen in einem Zustand ist oder durch eine Wärmenachbehandlung in einen Zustand versetzbar ist, in dem sie durch mechanische Umformung weiterverarbeitbar ist.

4. Verfahren nach einem der vorhergehenden Ansprüche, **dadurch gekennzeichnet, dass** als Temperatursensor ein Mantelthermoelement (24) eingesetzt wird, bei dem zwei Thermodrähte (34, 35) in einen von einem Mantel (20) umschlossenen Kern aus mineralischem Material oder hitzebeständigem Kunststoff eingebettet sind.

5. Koch- oder Bratgefäß, hergestellt aus einer Metallplatte (10), hergestellt nach einem Verfahren gemäß einem der vorhergehenden Ansprüche, das mit mindestens einem eingebetteten Temperatursensor versehen oder nachrüstbar ist und aufweist:
mindestens ein metallisches Schutzrohr (21), das der Mantel (20) eines Mantelthermoelements (24) ist oder das ein Leerrohr ist, in das ein Temperatursensor, vorzugsweise ein Mantelthermoelement (24) einschiebbar ist, das zwischen dem ersten und dem zweiten Plattenkörper (11, 12) angeordnet ist, die jeweils aus Aluminium und/oder einer Aluminiumlegierung bestehen und vor dem Walzen nicht mit Ausnehmungen zur Aufnahme des oder jedes metallischen Schutzrohres (21) versehen worden sind,
wobei das oder jedes metallische Schutzrohr (21) unmittelbar kontaktierend in den ersten und den zweiten Plattenkörper (11, 12) eingebettet ist, wobei der erste und der zweite Plattenkörper gesamtflächig und stoffschlüssig miteinander und mit dem oder jedem metallischen Schutzrohr (21) verbunden sind und wobei alle Plattenkörper (11, 12, 13, 14) im Bereich ihrer einander berührenden Seiten eine gegenseitige Diffusionsverbindung haben, so dass alle Plattenkörper (11, 12, 13, 14) gesamtflächig stoffschlüssig zu der herzustellenden Metallplatte (10) miteinander und mit dem oder jedem metallischen Schutzrohr (21) verbunden sind;
**dadurch gekennzeichnet, dass** die Metallplatte (10) durch Tiefziehen zu dem Koch- oder Bratgefäß (22, 22') umgeformt worden ist, das einen Boden aufweist, der mit einem Radius in eine sich von dem Boden aus nach oben erstreckende Wand übergeht, in der außen ein Ende des Mantels (20) des Mantelthermoelements (24) oder ein Ende des Leerrohres für einen elektrischen Anschluss des Temperatursensors freigelegt werden kann.

6. Koch- oder Bratgefäß nach Anspruch 5, **dadurch gekennzeichnet, dass** der erste und der zweite Plattenkörper (11, 12) als Kernschichten zwischen zwei Deckschichten, die durch einen dritten und einen vierten Plattenkörper (13, 14) gebildet sind und aus einem anderen Metall wie rostfreiem Stahl bestehen, angeordnet und gesamtflächig stoffschlüssig mit sich sowie dem dritten und dem vierten Plattenkörper (13, 14) diffusionsverbunden sind.

7. Koch- oder Bratgefäß nach Anspruch 5 oder 6, **dadurch gekennzeichnet, dass** es nach dem Walzen in einem Zustand ist oder durch eine Wärmenachbehandlung in einen Zustand versetzbar ist, in dem es durch mechanische Umformung weiterverarbeitbar ist.

8. Koch- oder Bratgefäß nach einem der Ansprüche 5 bis 7, **dadurch gekennzeichnet, dass** es als Temperatursensor ein Thermoelement (24) aufweist, bei dem zwei Thermodrähte (34, 35) in eine von einem Mantel (20) umschlossene Isolation (30) aus mineralischem Material oder hitzebeständigem Kunststoff eingebettet sind.

9. Koch- oder Bratgefäß nach Anspruch 8, **dadurch gekennzeichnet, dass** der Temperatursensor ein Mantelthermoelement (24) ist, das vor dem Walzprozess in das Schutzrohr (21) eingeschoben und in dem Walzprozess mit dem Schutzrohr (21) in die Metallplatte (10) eingewalzt worden ist oder das statt des Schutzrohres (21) in die Metallplatte (10) eingewalzt worden ist.

## Claims

1. A method for producing and, if required, processing a metal plate (10) which is formed of plate bodies and provided or retrofittable with at least one embedded temperature sensor, comprising the following steps:
a) arranging at least one metallic protective tube (21) which is the sheath (20) of a sheathed thermocouple (24) or a conduit into which a temperature sensor, preferably a sheathed thermocouple (24), is insertable after the production and, if required, processing of the metal plate (10) between a first and a second plate body (11, 12) which are not provided with recesses for accommodating the or each protective tube (21) and which are made of aluminium and/or an aluminium alloy, respectively,
b) embedding the or each protective tube (21), in direct contact, in the first and the second plate body (11, 12) by compression and material displacement of the first and the second plate body (11, 12) by rolling, and thereby
c) connecting the entire surfaces of the plate bodies (11, 12), wherein the plate bodies (11, 12) are thermally pre-treated at a temperature which is higher than the recrystallisation temperature of aluminium or the aluminium alloy but lower than the melting point of aluminium and then pressed against each other by the rolling to accomplish the embedment of the or each protective tube (21) in the plate bodies (11, 12), wherein the plate bodies (11, 12) undergo mutual diffusion bonding in the area of their sides contacting each other, whereby the plate bodies (11, 12) are materially connected to each other and to the or each protective tube (21) across the entire surface area to form the metal plate (10) to be produced;
**characterised in that** the metal plate (10) is reshaped into a cooking or frying vessel (22, 22') including a base and a wall extending upwards therefrom with a radius by thermoforming after rolling and **in that** then one end of the sheath (20) or the conduit is exposed on the outer side of the wall for an electrical connection of the temperature sensor.

2. The method according to claim 1, **characterised in that** the two plate bodies (11, 12) as the core layers are arranged between two cover layers formed by a third and a fourth plate body (13, 14) and made of another metal such as stainless steel prior to rolling and materially diffusion-connected to each other and to the other two plate bodies (11, 12) across the entire surface area during rolling.

3. The method according to one of the preceding claims, **characterised in that** the metal plate (10) is in a state after rolling or can be brought into a state by post heat treatment in which it can be further processed by mechanical reshaping.

4. The method according to one of the preceding claims, **characterised in that**, as the temperature sensor, a sheathed thermocouple (24) is used in which two thermocouple wires (34, 35) are embedded in a core enclosed in a sheath (20) and made of a mineral-based material or a heat-resistant plastic material.

5. A cooking or frying vessel produced from a metal plate (10), produced according to a method according to one of the preceding claims, provided or retrofittable with at least one embedded temperature sensor, and comprising:
at least one metallic protective tube (21) which is the sheath (20) of a sheathed thermocouple (24) or a conduit into which a temperature sensor, preferably a sheathed thermocouple (24), is insertable which is arranged between the first and the second plate body (11, 12) which are made of aluminium and/or an aluminium alloy, respectively, and were not provided with recesses for accommodating the or each metallic protective tube (21) prior to the rolling,
wherein the or each metallic protective tube (21) is, in direct contact, embedded in the first and the second plate body (11, 12), wherein the first and the second plate body are materially connected to each other and to the or each metallic protective tube (21) across the entire surface area, and wherein all plate bodies (11, 12, 13, 14) have a mutual diffusion connection in the area of their contacting sides so that all plate bodies (11, 12, 13, 14) are materially connected to each other and to the or each metallic protective tube (21) across the entire surface area to form the metal plate (10) to be produced;
**characterised in that** the metal plate (10) was, by thermoforming, reshaped into the cooking or frying vessel (22, 22') having a base transitioning into a wall which extends upwards from the base with a radius and on the outer side of which one end of the sheath (20) of the sheathed thermocouple (24) or one end of the conduit can be exposed for an electrical connection of the temperature sensor.

6. A cooking or frying vessel according to claim 5, **characterised in that** the first and the second plate body (11, 12) as the core layers are arranged between two cover layers formed by a third and a fourth plate body (13, 14) and made of another metal such as stainless steel and materially diffusion-connected to each other as well as to the third and the fourth plate body (13, 14) across the entire surface area.

7. A cooking or frying vessel according to claim 5 or 6, **characterised in that** it is in a state after rolling or can be brought into a state by post heat treatment in which it can be further processed by mechanical reshaping.

8. A cooking or frying vessel according to one of the claims 5 to 7, **characterised in that** it includes, as the temperature sensor, a thermocouple (24) in which two thermocouple wires (34, 35) are embedded in an insulation (30) enclosed in a sheath (20) and made of a mineral-based material or a heat-resistant plastic material.

9. A cooking or frying vessel according to claim 8, **characterised in that** the temperature sensor is a sheathed thermocouple (24) which was inserted into the protective tube (21) prior to the rolling process and rolled into in the metal plate (10) together with the protective tube (21) in the rolling process or which was rolled into in the metal plate (10) instead of the protective tube (21).

## Revendications

1. Procédé de fabrication et éventuellement de traitement d'une plaque métallique (10) qui comprend des corps de plaque qui est équipée ou peut être équipée ultérieurement d'au moins un capteur de température intégré, ledit procédé comprenant les étapes suivantes :
a) disposer au moins un tube de protection métallique (21), qui est l'enveloppe (20) d'un thermocouple à enveloppe (24) ou qui est un tube vide dans lequel un capteur de température, de préférence un thermocouple à enveloppe (24), peut être inséré après la fabrication et éventuellement le traitement de la plaque métallique (10), entre un premier et un deuxième corps de plaque (11, 12), qui ne sont pas pourvus d'évidements destinés à recevoir le ou chaque tube de protection (21) et qui sont chacun en aluminium et/ou en un alliage d'aluminium,
b) intégrer le ou chaque tube de protection (21) en contact direct dans les premier et deuxième corps de plaque (11, 12) par pressage l'un contre l'autre et déplacement de matière des premier et deuxième corps de plaque (11, 12) par laminage et
c) relier ainsi les corps de plaque (11, 12) les uns aux autres sur toute la surface, les corps de plaque (11, 12) étant prétraités thermiquement à une température qui est supérieure à la température de recristallisation de l'aluminium ou de l'alliage d'aluminium mais inférieure au point de fusion de l'aluminium, puis pressés les uns contre les autres par laminage afin d'incorporer le ou chaque tube de protection (21) dans les corps de plaque (11, 12), les corps de plaque (11, 12) établissant une liaison de diffusion mutuelle dans la zone de leurs côtés en contact et ainsi les corps de plaque (11, 12) étant reliés entre eux et au ou à chaque tube de protection (21) sur toute la surface par une liaison de matière pour obtenir la plaque métallique (10) à fabriquer ;
**caractérisé en ce que**, après laminage, la plaque métallique (10) est mise en forme par emboutissage profond dans un récipient de cuisson ou de friture (22, 22'), qui comporte un fond et une paroi qui s'étend depuis ledit fond vers le haut avec un rayon, et **en ce qu'**ensuite une extrémité de l'enveloppe (20) ou du tuyau vide est exposée à l'extérieur dans la paroi afin de raccorder électriquement le capteur de température.

2. Procédé selon la revendication 1, **caractérisé en ce que**, avant le laminage, les deux corps de plaque (11, 12) sont disposés sous la forme de couches centrales entre deux couches de revêtement qui sont formées par un troisième et un quatrième corps de plaque (13, 14) et qui sont en un autre métal tel que de l'acier inoxydable et, pendant le laminage, sont liés par diffusion sur toute la surface par une liaison de matière à eux-mêmes et aux deux corps de plaque restants (11, 12).

3. Procédé selon l'une des revendications précédentes, **caractérisé en ce que** la plaque métallique (10) est dans un état après laminage, ou peut être mise dans un état par post-traitement thermique, dans lequel elle peut être traitée ensuite par formage mécanique.

4. Procédé selon l'une des revendications précédentes, **caractérisé en ce que** le capteur de température utilisé est un thermocouple à enveloppe (24) dans lequel deux fils thermiques (34, 35) sont incorporés dans une âme qui est en matière minérale ou en matière synthétique résistant à la chaleur et qui est entourée d'une enveloppe (20).

5. Récipient de cuisson ou de friture, réalisé à partir d'une plaque métallique (10), réalisée selon un procédé selon l'une des revendications précédentes, lequel récipient est muni ou peut être équipé ultérieurement d'au moins un capteur de température incorporé et comporte :
au moins un tube de protection métallique (21), qui est l'enveloppe (20) d'un thermocouple à enveloppe (24) ou qui est un tube vide dans lequel un capteur de température, de préférence un thermocouple à enveloppe (24), peut être inséré, qui est disposé entre le premier et le deuxième corps de plaque (11, 12) qui sont chacun en aluminium et/ou en un alliage d'aluminium et qui n'ont pas été munis d'évidements destinés à recevoir le ou chaque tube de protection métallique (21) avant le laminage,
le ou chaque tube de protection métallique (21) étant incorporé en contact direct dans les premier et deuxième corps de plaque (11, 12), les premier et deuxième corps de plaque étant reliés l'un à l'autre par une liaison de matière sur toute la surface et au ou à chaque tube de protection métallique (21) et tous les corps de plaque (11, 12, 13, 14) présentant une liaison de diffusion mutuelle dans la zone de leurs côtés en contact, de sorte que tous les corps de plaque (11, 12, 13, 14) soient liés sur toute la surface par une liaison de matière entre eux et au ou à chaque tube métallique de protection (21) pour obtenir la plaque métallique (10) à réaliser ;
**caractérisé en ce que** la plaque métallique (10) a été mise en forme par emboutissage profond dans le récipient de cuisson ou de friture (22, 22'), qui comporte un fond qui se transforme avec un certain rayon en une paroi qui s'étend depuis le fond vers le haut et dans laquelle une extrémité de l'enveloppe (20) du thermocouple à enveloppe (24) ou une extrémité du tube vide peut être exposée à l'extérieur afin de raccorder électriquement le capteur de température.

6. Récipient de cuisson ou de friture selon la revendication 5, **caractérisé en ce que** les premier et deuxième corps de plaque (11, 12) sont disposés sous forme de couches centrales entre deux couches de revêtement qui sont formées par un troisième et un quatrième corps de plaque (13, 14) et qui sont en un autre métal tel que de l'acier inoxydable, et sont liés par diffusion sur toute la surface à eux-mêmes et aux troisième et quatrième corps de plaque (13, 14).

7. Récipient de cuisson ou de friture selon la revendication 5 ou 6, **caractérisé en ce que**, après le laminage, il est dans un état, ou peut être mis dans un état par post-traitement thermique, dans lequel il peut être traité ultérieurement par formage mécanique.

8. Récipient de cuisson ou de friture selon l'une des revendications 5 à 7, **caractérisé en ce qu'**il comporte comme capteur de température un thermocouple (24) dans lequel deux fils thermiques (34, 35) sont incorporés dans une isolation (30) qui est entourée par une enveloppe (20) et qui est en matière minérale ou en matière synthétique résistant à la chaleur.

9. Récipient de cuisson ou de friture selon la revendication 8, **caractérisé en ce que** le capteur de température est un thermocouple à enveloppe (24) qui est inséré dans le tube de protection (21) avant le laminage et qui a été incorporé par laminage dans la plaque métallique (10) avec le tube de protection (21) lors du processus de laminage, ou qui a été incorporé par laminage dans la plaque métallique (10) à la place du tube de protection (21).
